# EUROPEAN PATENT SPECIFICATION

(11) **EP 4 425 663 B1**
(45) Date of publication and mention of the grant of the patent: **04.03.2026**
(21) Application number: 22887414.5
(22) Date of filing: 11.10.2022
(51) Int. Cl.: H02J 7/00, H01M 50/24, H01M 50/296, H01R 13/52

(54) **BATTERY MODULE TO WHICH CONNECTOR HAVING IMPROVED FLAME RETARDANCY IS APPLIED**
BATTERIEMODUL, AN DEM EIN STECKVERBINDER MIT VERBESSERTER FLAMMHEMMUNG ANGEWENDET WIRD
MODULE DE BATTERIE AUQUEL EST APPLIQUÉ UN CONNECTEUR À RETARDEMENT DE FLAMME AMÉLIORÉ

(30) Priority: 01.11.2021 KR 20210148272
(43) Date of publication of application: 04.09.2024
(73) Proprietor: LG Energy Solution, Ltd., Seoul 07335 (KR)
(72) Inventor: YUN, Hyun-Seop, Daejeon 34122 (KR); SEONG, Jun-Yeob, Daejeon 34122 (KR); LEE, Bum-Hyun, Daejeon 34122 (KR)
(74) Representative: Plasseraud IP
(86) International application number: PCT/KR2022/015316
(87) International publication number: WO 2023/075211

(56) References cited:
- CN-A- 113 572 184
- CN-U- 213 660 567
- KR-A- 20180 043 232
- KR-A- 20210 122 510
- US-A1- 2021 036 281

## Description

### TECHNICAL FIELD

The present disclosure relates to a battery module, and more specifically, to a battery module to which a connector having improved flame retardancy is applied.

### BACKGROUND ART

Currently commercialized secondary batteries include nickel cadmium batteries, nickel hydride batteries, nickel zinc batteries, lithium secondary batteries, and the like. In particular, lithium secondary batteries are in the spotlight because they have almost no memory effect compared to nickel-based secondary batteries and thus have advantages of free charge/discharge, very low self-discharge rate, and high energy density.

The secondary battery may be used alone, but in general, a plurality of secondary batteries are electrically connected to each other in series and/or in parallel in many cases. In particular, a plurality of secondary batteries may be accommodated in one module case in a state of being electrically connected to each other to constitute one battery module. Also, the battery module may be used alone, or two or more may be electrically connected to each other in series and/or in parallel to constitute a higher level device such as a battery pack.

However, when a plurality of battery modules exist in a dense state in a narrow space as described above, they may be vulnerable to fire. For example, when a thermal runaway occurs in a battery cell of any one battery module and this intensifies, high-temperature gas and sparks may be ejected from the battery cell. Here, the sparks refer to active materials deintercalated from electrodes inside the battery cell or molten aluminum particles. At this time, a flame or the like may occur in the battery cell in some cases. When the gas or flame is indiscriminately discharged to the outside of the battery module, thermal damage may be given to the surrounding battery modules, and thus fire may rapidly spread.

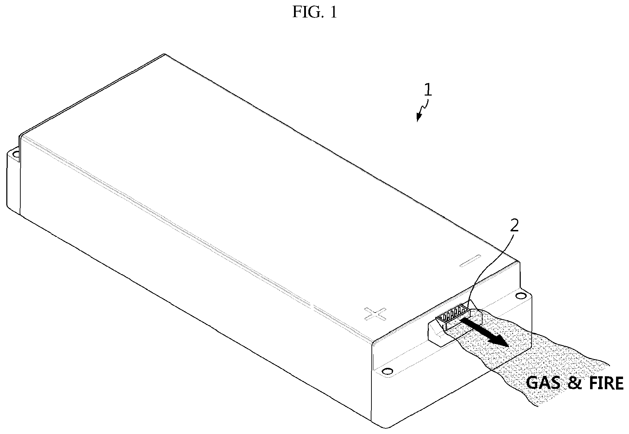

For example, in the conventional battery module 1, as shown in FIG. 1, the connector 2 is exposed to the outside of the module case, but since the connector is generally manufactured by injection molding made of a plastic material, it is very vulnerable to heat or flame. For this reason, when high-temperature gas or flame is generated inside the battery module, the connector melts, and the gas and flame are easily discharged to the outside through the lost connector portion. The gas and flame discharged in this way may cause ignition of other battery modules adjacent to the corresponding battery module.

Therefore, when the battery module is internally ignited, there is a need for a way to minimize propagation to other neighboring battery modules by preventing gas from being discharged to the outside from the connector side by enhancing the flame retardancy of the connector and discharging the gas through a pre-intended safety path.

An example of prior art battery module can be found in KR 2021-0122510 A.

### DISCLOSURE

### Technical Problem

The present disclosure is designed to solve the problems of the related art, and therefore the present disclosure is directed to suppressing or delaying the loss of the connector due to high-temperature gas in case of internal ignition of the battery module by enhancing the flame retardancy of the connector.

Also, the present disclosure is directed to minimizing propagation to other neighboring battery modules by preventing gas leakage through the connector by enhancing the flame retardancy of the connector and discharging high-temperature gas through a pre-intended safety path.

However, technical problems to be solved by the present disclosure are not limited to the above-described problems, and other problems not mentioned herein may be clearly understood by those skilled in the art from the following description of the present disclosure.

### Technical Solution

A battery module according to the present disclosure for solving the above-described problems is defined according to independent claim 1.

The flame retardant block may be made of aluminum, and the coating layer may include ceramic particles.

The flame retardant block may have a thickness of the layer made of aluminum within a range of 3 mm to 10 mm, and a thickness of the coating layer may be provided within a range of 0.1 mm to 1 mm.

The connector assembly may include a sealing gasket disposed on the upper surface of the flame retardant block opposite to the lower surface of the flame retardant block and provided to surround the outer circumference of the first housing; and a fixing plate disposed on the upper portion of the sealing gasket by passing through the first housing, wherein the fixing plate, the sealing gasket, and the flame retardant block may be integrally fixed and coupled by a fastening member.

The module case may include a main housing provided in a rectangular tubular shape capable of accommodating the cell assembly therein; and a front cover and a rear cover provided to cover the front and rear sides of the main housing.

The connector mounting hole may be provided in the front cover, and the main housing may include a top plate covering the upper portion of the cell assembly, a bottom plate covering the lower portion of the cell assembly, and a left side plate and a right side plate covering both side portions of the cell assembly, wherein the top plate may have a venting hole for discharging gas in case of ignition of the battery cell.

The battery module may include an insulating cover plate made of an electrically insulating material and provided between the upper portion of the cell assembly and the top plate, wherein the insulating cover plate may have one or more cutting lines cut in a predetermined shape, wherein the cutting line may be provided at a position corresponding to the venting hole.

The cutting line may have an arc or C shape.

According to another aspect of the present disclosure, there may be provided a battery pack including the above-described battery module.

### Advantageous Effects

According to one aspect of the present disclosure, it is possible to suppress or delay the loss of the connector due to high-temperature gas in case of internal ignition of the battery module by enhancing the flame retardancy of the connector.

In addition, according to another aspect of the present disclosure, it is possible to minimize propagation to other neighboring battery modules by preventing gas leakage through the connector by enhancing the flame retardancy of the connector and discharging high-temperature gas through a pre-intended safety path.

However, advantageous effects to be obtained by the present disclosure are not limited to the above-described effects, and other effects not mentioned herein may be clearly understood by those skilled in the art from the following description of the present disclosure.

### DESCRIPTION OF DRAWINGS

FIG. 1 is a view schematically illustrating an example in which gas and flame generated inside a battery module according to the prior art are discharged through a connector.
FIG. 2 is a schematic perspective view of a battery module according to an embodiment of the present disclosure.
FIG. 3 is a partially exploded perspective view of the battery module of FIG. 1.
FIG. 4 is an exploded perspective view of a cell assembly, a bus bar frame, and an insulating cover plate according to an embodiment of the present disclosure.
FIG. 5 is an enlarged view of a main portion of FIG. 2.
FIG. 6 is a perspective view illustrating the configuration of a connector assembly according to an embodiment of the present disclosure.
FIG. 7 is a combined perspective view of the connector assembly of FIG. 6.
FIG. 8 is a cross-sectional view of the flame retardant block taken along line A-A' of FIG. 6.
FIG. 9 is a reference view illustrating an example in which gas venting is induced to an upper portion of a module case in case of internal ignition of a battery module according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In addition, the description proposed herein is just a preferable example for the purpose of illustrations only, not intended to limit the scope of the present disclosure, so it should be understood that other equivalents and modifications could be made thereto without departing from the scope of the present disclosure.

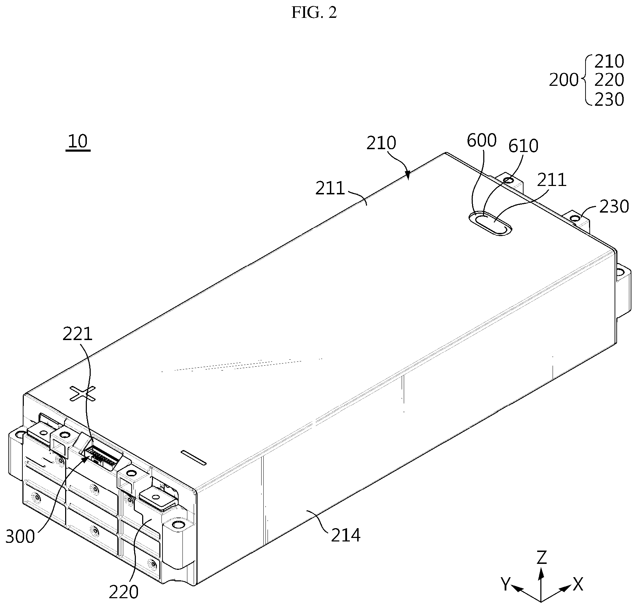

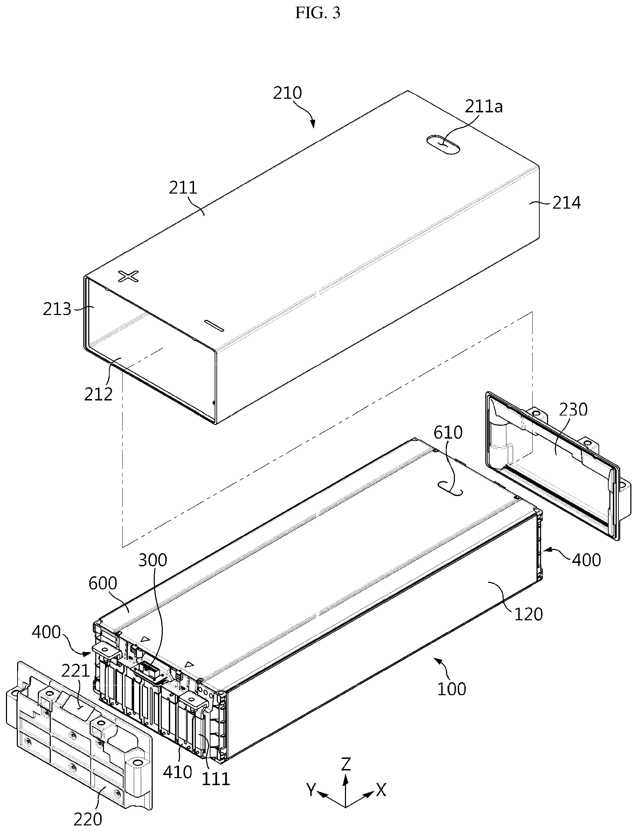

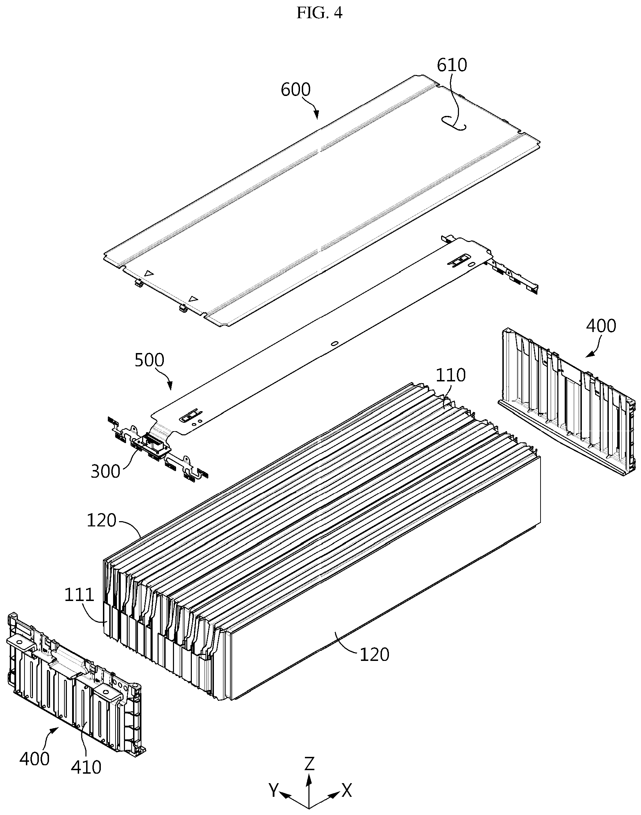

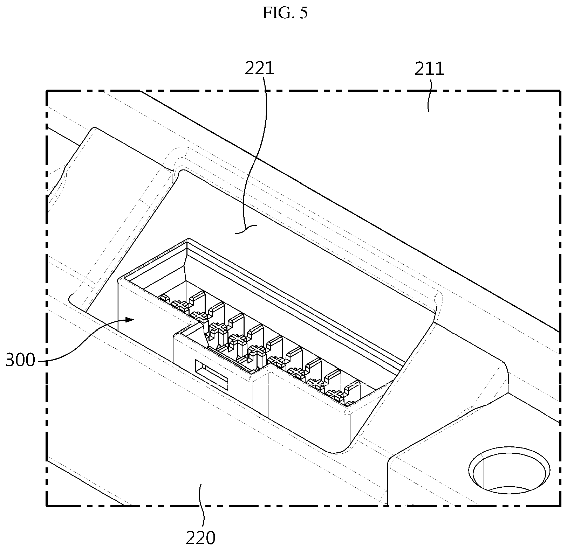

FIG. 2 is a schematic perspective view of a battery module according to an embodiment of the present disclosure, FIG. 3 is a partially exploded perspective view of the battery module of FIG. 1, FIG. 4 is an exploded perspective view of a cell assembly, a bus bar frame, and an insulating cover plate according to an embodiment of the present disclosure, and FIG. 5 is an enlarged view of a main portion of FIG. 2.

Referring to these drawings, a battery module 10 according to an embodiment of the present disclosure includes a cell assembly 100, a module case 200, and a connector assembly 300.

The cell assembly 100 may be referred to as an assembly of battery cells 110 formed by stacking a plurality of battery cells 110. For example, the cell assembly 100 may be provided in a form where the battery cells 110 are stacked in a horizontal direction by standing in a vertical direction, respectively. Here, the battery cell 110 is a pouch-type secondary battery, and is a bidirectional pouch-type secondary battery in which a positive electrode lead and a negative electrode lead extend in opposite directions along the lengthwise direction of the battery cell 110.

The cell assembly 100 may further include buffer pads 120 disposed at both outermost sides in the stacking direction. The buffer pad 120 may be composed of a foam material capable of absorbing pressure during swelling of the battery cells 110 and maintaining electrical insulation with the module case 200.

The pouch-type secondary battery may be composed of an electrode assembly, an electrolyte, and a pouch case. The pouch case may be composed of two pouches, at least one of which may have a concave inner space formed therein. The electrode assembly and the electrolyte may be accommodated in the inner space of the pouch case. Sealing portions are provided on the outer circumferential surfaces of the two pouches and are fused to each other, so that the inner space in which the electrode assembly is accommodated may be sealed. A portion of the electrode lead is interposed between the sealing portions of the pouch case, one end thereof is attached to the electrode assembly, and the other end thereof is exposed to the outside of the pouch case, thereby functioning as an electrode terminal of the secondary battery.

As shown in FIG. 3, the module case 200 may include a main housing 210, a front cover 220, and a rear cover 230.

The main housing 210 has a rectangular tubular shape having a length substantially corresponding to the length of the cell assembly 100, and may be configured such that the cell assembly 100 is inserted into the inner space together with an insulating cover plate 600 to be described later in an interference-fitting manner. Such a main housing 210 is advantageous in reducing the weight and volume of the battery module 10. In addition, the main housing 210 is made of a metal material having excellent mechanical rigidity and a high melting point, and has a closed structure on four sides. Thus, when gas or flame is generated in the cell assembly 100, the flame may not be easily discharged to the outside through the four sides. Also, the main housing 210 may have a high flame retardant function by coating the inner surface with an incombustible material.

The main housing 210 may include a top plate 211, a bottom plate 212, a left side plate 213 and a right side plate 214 corresponding to four sides, and may be configured to have at least one venting hole 211a in the top plate 211.

The venting hole 211a may be an outlet through which the gas is discharged to the outside of the battery module 10 when a large amount of gas is generated in case of internal ignition of the battery module 10. Although not shown, when a battery pack is configured using the battery module 10 of the present disclosure, a duct structure capable of communicating with the venting hole 211a may be disposed above the battery module to discharge the gas escaping from the venting hole 211a of the battery module 10 to the outside of the battery pack through a predetermined path.

As described above, by applying the venting hole 211a to the top plate 211 of the main housing 210, the gas may be discharged through a specific path in case of internal ignition of the battery module 10, thereby preventing external collapse of the battery module 10 due to an increase in the internal pressure of the battery module 10 and minimizing thermal damage to other neighboring battery modules 10 by discharging the gas in an unintended direction.

Meanwhile, in the main housing 210 of the present embodiment, the top plate 211, the bottom plate 212, the left side plate 213 and the right side plate 214 are all provided in an integrated type, but the scope of the present disclosure is not limited thereto. For example, the main housing 210 may be manufactured in a type in which a U-shaped frame and a plate-shaped plate are coupled by welding or the like. Here, the U-shaped frame is made by integrally manufacturing the bottom plate 212, the left side plate 213 and the right side plate 214, and the plate-shaped plate corresponds to the top plate 211 manufactured separately.

The front cover 220 and the rear cover 230 are structures to be coupled to the opening of the main housing 210 and to cover the front and rear sides of the cell assembly 100. The front cover 220 and the rear cover 230 have inner surfaces made of an insulating and flame retardant material or coated with an incombustible material, and thus are configured to shield the electrical connection portion of the cell assembly 100 and suppress or delay the leakage of gas or flame as much as possible.

In addition, the front cover 220 may have a connector mounting hole 221 formed by penetrating one side. The connector mounting hole 221 is configured to connect, for example, a predetermined cable connector (not shown) to the connector assembly 300 of the battery module 10 according to the present disclosure.

The connector assembly 300 is connected to a circuit board provided inside the module case 200, and as shown in FIG. 5, a portion of the connector assembly 300 may be configured to be exposed to the outside of the module case 200 through the connector mounting hole 221. Here, the circuit board means a flexible printed circuit board forming a voltage sensing member 500 to be described later.

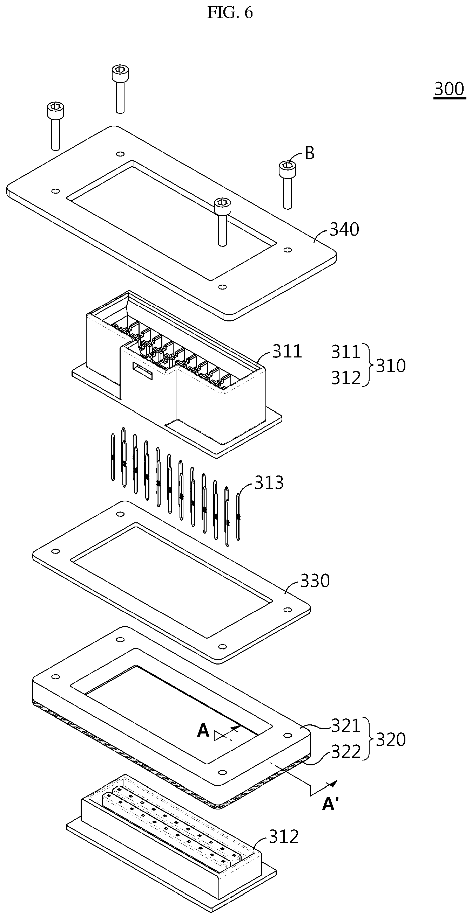

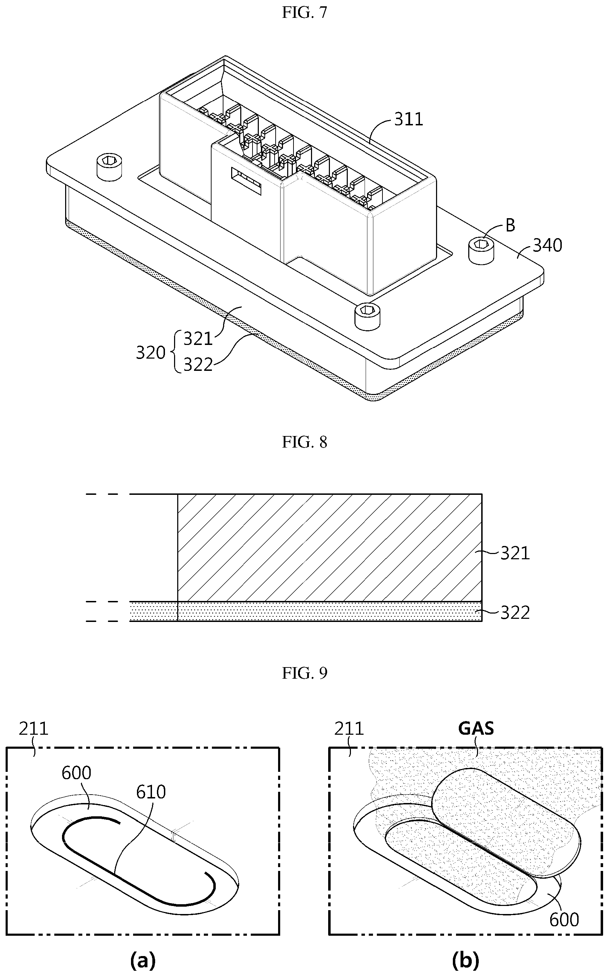

More specifically, referring to FIGS. 6 and 7, the connector assembly 300 may include a connector housing 310, a flame retardant block 320, a sealing gasket 330, and a fixing plate 340.

The connector housing 310 includes a first housing 311 and a second housing 312.

The first housing 311 is made of a plastic material, and may be configured such that an inlet may face upward and be exposed to the outside of the front cover 220 through the connector mounting hole 221. The second housing 312 is a component for providing sealing properties to the inside of the first housing 311, and at least a portion of the second housing 312 may be interposed in the first housing 311. In addition, the second housing 312 is made of an epoxy or silicone resin material, and may be configured to prevent vibration and movement of the connector pins 313 by being hardened in a form of wrapping around a portion of each connector pin 313.

The flame retardant block 320 is formed of a metal material having a high melting point and may be provided in a rectangular frame shape surrounding the circumference of the connector housing 310 inside the module case.

The flame retardant block 320 may include an aluminum (Al) layer having a thickness of approximately 5.4 mm and a coating layer 322 of an incombustible material formed by applying ceramic particles to the lower surface of the aluminum layer 321. The thickness of the coating layer 322 may be preferably about 0.1 mm. Here, the lower surface of the aluminum layer 321 means a surface facing the inside of the module case 200. Of course, the thicknesses of the aluminum layer 321 and the coating layer 322 may be designed differently from those in the present embodiment. For example, the flame retardant block 320 may be designed such that the thickness of the aluminum layer is within a range of 3 mm to 10 mm and the thickness of the coating layer is within a range of 0.05 mm to 1 mm.

The flame retardant block 320 functions like a firewall to prevent high-temperature gas or flame from moving from the inside of the module case 200 to the periphery of the connector housing 310, thereby serving to prevent the connector housing 310 from rapidly melting. In addition, the flame retardant block 320 covers the connector mounting hole 221 inside the module case 200, so it may effectively prevent gas or flame from moving toward the connector mounting hole 221.

Meanwhile, the present applicant attempted to apply a flame retardant block in which aluminum (Al) and stainless steel (SUS) are double bonded to the connector assembly in the research stage. Since stainless steel has a higher melting point than aluminum, a flame retardant block made of aluminum and stainless steel is superior in flame retardancy to a flame retardant block made of simply aluminum. However, there was a problem in that it was difficult to design a flame retardant block with a desired thickness due to the increase in cost caused by the double bonding of the aluminum and stainless steel and the increase in the thickness of the flame retardant block, especially when the two metals were double bonded. However, according to the configuration of the flame retardant block 320 in which the coating of the incombustible material is applied to the aluminum layer 321 as described above, it is possible to design the thickness of the flame retardant block 320 more freely while increasing flame retardancy.

The sealing gasket 330 may be referred to as a configuration for eliminating a gap due to the tolerance between the circumference of the connector housing 310 and the inner diameter of the flame retardant block 320 in the form of a frame. The sealing gasket 330 may be made of an elastic rubber or silicon material and may be provided to surround the outer circumference of the connector housing 310. As in the present embodiment, the sealing gasket 330 may be configured to surround the outer circumference of the first housing 311 and to be disposed on the upper surface of the flame retardant block 320.

The fixing plate 340 is configured to be used as a means for fixing the sealing gasket 330 to the flame retardant block 320. For example, as shown in FIG. 7, the fixing plate 340 passes through the body of the first housing 311 at the entrance of the first housing 311 and is disposed above the sealing gasket 330, and together with the sealing gasket 330, it may be integrally fixed and coupled to the flame retardant block 320. To this end, the fixing plate 340, the sealing gasket 330 and the flame retardant block 320 may have bolt fastening holes matching each other when being stacked vertically and may be configured to be integrally fixed and coupled to each other by the bolts B fastening.

Meanwhile, referring to FIGS. 2 to 4 again, the battery module 10 according to an embodiment of the present disclosure may further include a bus bar frame 400, a voltage sensing member 500, and an insulating cover plate 600.

The bus bar frame 400 is a means for installing and supporting a plurality of bus bars 410 and other electrical components. Here, the bus bar 410 refers to a conductive rod-shaped component made of copper, aluminum, or the like used to connect the battery cells 110 in series and/or in parallel. A predetermined number of battery cells 110 may be configured to be connected in series and/or in parallel with each other by welding positive electrode and negative electrode leads to one bus bar 410.

The bus bar frame 400 includes a front frame vertically disposed on the front portion of the cell assembly 100 and a rear frame vertically disposed on the rear portion of the cell assembly 100.

The front frame and the rear frame have each size corresponding to the front portion and the rear portion of the cell assembly 100, respectively and are provided in the form of a plate body capable of covering the corresponding portions, and they may be configured to mount a plurality of bus bars 410 on each one surface. In addition, the front frame and the rear frame may include slits through which the electrode leads of the battery cells 110 may pass in the front-rear direction (±X-axis direction). The battery cells 110 may be configured such that electrode leads may be drawn out to the front of the bus bar frame 400 through the slits, and the drawn out portion may be attached to the corresponding bus bar 410 by welding or the like. The electrode leads of the battery cells 110 and the bus bars 410 may be shielded by the front cover 220 and the rear cover 230.

The voltage sensing member 500 is a means for sensing voltages of the battery cells 110 and may be implemented as a flexible printed circuit board. The voltage sensing member 500 may be disposed along the lengthwise direction on an upper portion of the cell assembly 100 and may have as many welding plates as the number of bus bars 410 at both ends. The welding plates may be attached to each bus bar 410 by welding or the like. The above-described connector assembly 300 is fixedly mounted on the flexible printed circuit board and may be exposed to the outside through the connector mounting hole 221 of the front cover 220. For example, a cable connector may be connected to the connector assembly 300 to transmit voltage information of the battery cells 110 to an external device such as a BMS.

The insulating cover plate 600 is made of a material having electrical insulation, such as a plastic material, and is disposed on an upper portion of the cell assembly 100 to be used as a means for insulation between the cell assembly 100 and the top plate 211 of the main housing 210.

Specifically, the insulating cover plate 600 according to the present embodiment corresponds to the upper area of the cell assembly 100 and has a thin plate shape, and it may be configured such that both ends are hinged to the upper end of the bus bar frame 400.

According to the above configuration, when the cell assembly 100 is inserted into the main housing 210, insulation between the upper portion of the cell assembly 100 and the top plate 211 of the main housing 210 may be secured by the insulating cover plate 600, insulation between both outermost sides of the cell assembly 100 and both side plates 213, 214 of the main housing 210 may be secured by the buffer pad 120, and insulation between the lower portion of the cell assembly 100 and the bottom plate 212 of the main housing 210 may be secured by filling in-between gap with a thermally conductive resin (not shown).

In addition, according to the configuration in which the insulating cover plate 600 is disposed on the upper portion of the cell assembly 100 and hinged with the upper ends of the two bus bar frames 400 at both ends, it is easy to arrange the two bus bar frames 400 perpendicular to the front and rear of the cell assembly 100, and furthermore, when the electrode leads of the battery cells 110 are inserted into the bus bar frame 400, the two bus bar frames 400 may be rotated at a predetermined angle, which is convenient to insert electrode leads.

Also, referring to FIGS. 2 and 3, the insulating cover plate 600 is provided at a position vertically corresponding to the venting hole 211a of the main housing 210 and includes a cutting line 610 formed by cutting the body in a predetermined shape. For example, the cutting line 610 may have an approximately arc to C shape. Of course, unlike the present embodiment, the cutting line 610 may be replaced with a U-shape, a Y-shape, or the like.

The cutting line 610 is employed to allow the gas to be smoothly discharged to the outside through the insulating cover plate 600 when a large amount of gas is generated in case of internal ignition of the battery module 10. If the inside of the battery module 10 is filled with a large amount of gas in case of internal ignition of the battery module 10 and then the internal pressure rises, for example, as shown in FIG. 9, the portion with the cut line 610 is separated and the insulating cover plate 600 is partially opened, whereby the gas may pass through the insulating cover plate 600 and the top plate 211 and escape out of the module case 200.

By discharging the gas to the outside in this way, the risk of external collapse or explosion of the battery module 10 due to a sharp rise in internal pressure may be reduced, and for example, by discharging the gas outside the venting hole 211a along a predetermined path to the outside of the battery pack, propagation of high-temperature gas to other neighboring battery modules 10 may be minimized.

Meanwhile, a battery pack (not shown) according to an embodiment of the present disclosure includes one or more battery modules described above. In addition to the battery module, the battery pack may further include a pack case (not shown) for accommodating the battery module, various devices (not shown) for controlling charge/discharge of the battery module, such as a battery management system (BMS), a current sensor, a fuse, and the like.

Meanwhile, the terms indicating directions as used herein such as upper, lower, left, right, front, and rear are used for convenience of description only, and it is obvious to those skilled in the art that the terms may change depending on the position of the stated element or an observer.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure. However, the scope of protection is solely defined by the appended claims.

## Claims

1. A battery module (10) comprising:
a cell assembly (100) having battery cells (110);
a module case (200) accommodating the cell assembly (100) and having a connector mounting hole (221) at one side; and
a connector assembly (300) connected to a circuit board provided inside the module case (200) and having at least a portion exposed to the outside of the module case (200) through the connector mounting hole (221),
wherein the connector assembly (300) comprises:
a connector housing (310) having connector pins (313) inside and having at least a portion exposed to the outside of the connector mounting hole (221);
**characterized in that** the connector assembly (300) further comprises:
a flame retardant block (320) formed of a metal material and surrounding the circumference of the connector housing (310) inside the module case (200),
wherein the flame retardant block (320) has a coating layer (322) of an incombustible material on the surface facing the inside of the module case (200);
and **in that** the connector housing (310) comprises a first housing (311) having at least a portion exposed to the outside of the connector mounting hole (221), and a second housing (312) having at least a portion interposed inside the first housing (311).

2. The battery module (10) according to claim 1,
wherein the flame retardant block (320) is made of aluminum, and the coating layer (322) comprises ceramic particles.

3. The battery module (10) according to claim 2,
wherein the flame retardant block (320) has a thickness of the layer made of aluminum within a range of 3 mm to 10 mm, and a thickness of the coating layer (322) is provided within a range of 0.1 mm to 1 mm.

4. The battery module (10) according to claim 1,
wherein the connector assembly (300) comprises:
a sealing gasket (330) disposed on the upper surface of the flame retardant block (320) opposite to the lower surface of the flame retardant block (320) and provided to surround the outer circumference of the first housing (311); and
a fixing plate (340) disposed on the upper portion of the sealing gasket (330) by passing through the first housing (311),
wherein the fixing plate (340), the sealing gasket (330), and the flame retardant block (320) are integrally fixed and coupled by a fastening member (B).

5. The battery module (10) according to claim 1,
wherein the module case (200) comprises:
a main housing (210) provided in a rectangular tubular shape capable of accommodating the cell assembly (100) therein; and a front cover (220) and a rear cover (230) provided to cover the front and rear sides of the main housing (210).

6. The battery module (10) according to claim 5,
wherein the connector mounting hole (221) is provided in the front cover (220), and
the main housing (210) comprises a top plate (211) covering the upper portion of the cell assembly (100), a bottom plate (212) covering the lower portion of the cell assembly (100), and a left side plate (213) and a right side plate (214) covering both side portions of the cell assembly (100),
wherein the top plate (211) has a venting hole (211a) for discharging gas in case of ignition of the battery cell (110).

7. The battery module (10) according to claim 6,
which comprises an insulating cover plate (600) made of an electrically insulating material and provided between the upper portion of the cell assembly (100) and the top plate (211),
wherein the insulating cover plate (600) has one or more cutting lines (610) cut in a predetermined shape,
wherein the cutting line (610) is provided at a position corresponding to the venting hole (211a).

8. The battery module (10) according to claim 7,
wherein the cutting line (610) has an arc or C shape.

9. A battery pack comprising a battery module (10) according to any one of claims 1 to 8.

## Patentansprüche

1. Batteriemodul (10), umfassend:
eine Zellenanordnung (100), welche Batteriezellen (110) aufweist;
ein Modulgehäuse (200), welches die Zellenanordnung (100) aufnimmt und ein Verbindermontageloch (221) an einer Seite aufweist; und
eine Verbinderanordnung (300), welche mit einer Leiterplatte verbunden ist, welche im Inneren des Modulgehäuses (200) bereitgestellt ist, und welche zumindest einen Abschnitt aufweist, welcher durch das Verbindermontageloch (221) zum Äußeren des Modulgehäuses (200) hin freiliegt,
wobei die Verbinderanordnung (300) umfasst:
ein Verbindergehäuse (310), welches Verbinderstifte (313) im Inneren aufweist und welches zumindest einen Abschnitt aufweist, welcher zum Äußeren des Verbindermontagelochs (221) hin freiliegt;
**dadurch gekennzeichnet, dass** die Verbinderanordnung (300) ferner umfasst:
einen flammhemmenden Block (320), welcher aus einem metallischen Material gebildet ist und den Umfang des Verbindergehäuses (310) im Inneren des Modulgehäuses (200) umgibt,
wobei der flammhemmende Block (320) eine Beschichtungsschicht (322) aus einem nicht-brennbaren Material an der Oberfläche aufweist, welche dem Inneren des Modulgehäuses (200) zugewandt ist;
und dass das Verbindergehäuse (310) ein erstes Gehäuse (311), welches zumindest einen Abschnitt aufweist, welcher zum Äußeren des Verbindermontagelochs (221) hin freiliegt, und ein zweites Gehäuse (312) umfasst, welches zumindest einen Abschnitt aufweist, welcher im Inneren des ersten Gehäuses (311) eingefügt ist.

2. Batteriemodul (10) nach Anspruch 1,
wobei der flammhemmende Block (320) aus Aluminium hergestellt ist und die Beschichtungsschicht (322) Keramikpartikel umfasst.

3. Batteriemodul (10) nach Anspruch 2,
wobei der flammhemmende Block (320) eine Dicke der Schicht, welche aus Aluminium hergestellt ist, innerhalb eines Bereichs von 3 mm bis 10 mm aufweist, und eine Dicke der Beschichtungsschicht (322) innerhalb eines Bereichs von 0,1 mm bis 1 mm bereitgestellt ist.

4. Batteriemodul (10) nach Anspruch 1,
wobei die Verbinderanordnung (300) umfasst:
eine Dichtung (330), welche an der oberen Oberfläche des flammhemmenden Blocks (320) gegenüber der unteren Oberfläche des flammhemmenden Blocks (320) angeordnet ist und bereitgestellt ist, um den äußeren Umfang des ersten Gehäuses (311) zu umgeben; und
eine Fixierplatte (340), welche an dem oberen Abschnitt der Dichtung (330) angeordnet ist, indem sie durch das erste Gehäuse (311) verläuft,
wobei die Fixierplatte (340), die Dichtung (330) und der flammhemmende Block (320) integral fixiert und durch ein Befestigungselement (B) gekoppelt sind.

5. Batteriemodul (10) nach Anspruch 1,
wobei das Modulgehäuse (200) umfasst:
ein Hauptgehäuse (210), welches in einer rechteckigen, röhrenförmigen Form bereitgestellt ist, welche dazu in der Lage ist, die Zellenanordnung (100) darin aufzunehmen; und eine vordere Abdeckung (220) und eine hintere Abdeckung (230), welche bereitgestellt sind, um die vordere und hintere Seite des Hauptgehäuses (210) abzudecken.

6. Batteriemodul (10) nach Anspruch 5,
wobei das Verbindermontageloch (221) in der vorderen Abdeckung (220) bereitgestellt ist und
das Hauptgehäuse (210) eine Deckplatte (211), welche den oberen Abschnitt der Zellenanordnung (100) abdeckt, eine Bodenplatte (212), welche den unteren Abschnitt der Zellenanordnung (100) abdeckt, und eine linke Seitenplatte (213) und eine rechte Seitenplatte (214) umfasst, welche beide Seitenabschnitte der Zellenanordnung (100) abdecken,
wobei die Deckplatte (211) ein Entlüftungsloch (211a) zum Ablassen von Gas im Falle einer Entzündung der Batteriezelle (110) aufweist.

7. Batteriemodul (10) nach Anspruch 6,
welches eine isolierende Abdeckplatte (600) umfasst, welche aus einem elektrisch isolierenden Material hergestellt ist und zwischen dem oberen Abschnitt der Zellenanordnung (100) und der Deckplatte (211) bereitgestellt ist,
wobei die isolierende Abdeckplatte (600) eine oder mehrere Schnittlinien (610) aufweist, welche in einer vorbestimmten Form geschnitten sind,
wobei die Schnittlinie (610) an einer Position bereitgestellt ist, welche dem Entlüftungsloch (211a) entspricht.

8. Batteriemodul (10) nach Anspruch 7,
wobei die Schnittlinie (610) eine Bogen- oder C-Form aufweist.

9. Batteriepack umfassend ein Batteriemodul (10) nach einem der Ansprüche 1 bis 8.

## Revendications

1. Module de batterie (10) comprenant :
un ensemble d'éléments (100) présentant un ou plusieurs éléments de batterie (110) ;
un boîtier de module (200) accueillant l'ensemble d'éléments (100) et présentant un trou de montage de connecteur (221) au niveau d'un côté ; et
un ensemble connecteur (300) connecté à une carte de circuit imprimé disposée à l'intérieur du boîtier de module (200) et présentant au moins une partie exposée à l'extérieur du boîtier de module (200) à travers le trou de montage de connecteur (221),
dans lequel l'ensemble connecteur (300) comprend :
un boîtier de connecteur (310) présentant des broches de connecteur (313) à l'intérieur et présentant au moins une partie exposée à l'extérieur du trou de montage de connecteur (221) ;
**caractérisé en ce que** l'ensemble connecteur (300) comprend en outre :
un bloc ignifuge (320) formé d'un matériau métallique et entourant la circonférence du boîtier de connecteur (310) à l'intérieur du boîtier de module (200),
dans lequel le bloc ignifuge (320) présente une couche de revêtement (322) d'un matériau incombustible sur la surface faisant face à l'intérieur du boîtier de module (200) ;
et **en ce que** le boîtier de connecteur (310) comprend un premier boîtier (311) présentant au moins une partie exposée à l'extérieur du trou de montage de connecteur (221) et un second boîtier (312) présentant au moins une partie interposée à l'intérieur du premier boîtier (311).

2. Module de batterie (10) selon la revendication 1,
dans lequel le bloc ignifuge (320) est composé d'aluminium, et la couche de revêtement (322) comprend des particules de céramique.

3. Module de batterie (10) selon la revendication 2,
dans lequel le bloc ignifuge (320) présente une épaisseur de la couche composée d'aluminium comprise dans une plage de 3 mm à 10 mm, et une épaisseur de la couche de revêtement (322) est prévue dans une plage de 0,1 mm à 1 mm.

4. Module de batterie (10) selon la revendication 1,
dans lequel l'ensemble connecteur (300) comprend :
un joint d'étanchéité (330) disposé sur la surface supérieure du bloc ignifuge (320) opposée à la surface inférieure du bloc ignifuge (320) et prévu pour entourer la circonférence externe du premier boîtier (311) ; et
une plaque de fixation (340) disposée sur la partie supérieure du joint d'étanchéité (330) en passant à travers le premier boîtier (311),
dans lequel la plaque de fixation (340), le joint d'étanchéité (330) et le bloc ignifuge (320) sont fixés et accouplés d'un seul tenant par un organe de fixation (B).

5. Module de batterie (10) selon la revendication 1,
dans lequel le module de boîtier (200) comprend :
un boîtier principal (210) de forme tubulaire rectangulaire apte à accueillir l'ensemble d'éléments (100) en son sein ; et un couvercle avant (220) et un couvercle arrière (230) prévus pour couvrir les côtés avant et arrière du boîtier principal (210).

6. Module de batterie (10) selon la revendication 5,
dans lequel le trou de montage de connecteur (221) est prévu dans le couvercle avant (220), et
le boîtier principal (210) comprend une plaque supérieure (211) couvrant la partie supérieure de l'ensemble d'éléments (100), une plaque inférieure (212) couvrant la partie inférieure de l'ensemble d'éléments (100) et une plaque latérale gauche (213) et une plaque latérale droite (214) couvrant les deux parties latérales de l'ensemble d'éléments (100),
dans lequel la plaque supérieure (211) présente un trou d'aération (211a) destiné à décharger du gaz en cas de début de combustion de l'élément de batterie (110).

7. Module de batterie (10) selon la revendication 6,
qui comprend une plaque de couverture isolante (600) composée d'un matériau électriquement isolant et prévue entre la partie supérieure de l'ensemble d'éléments (100) et la plaque supérieure (211),
dans lequel la plaque de couverture isolante (600) présente une ou plusieurs lignes de découpe (610) découpées sous une forme prédéterminée,
dans lequel la ligne de découpe (610) est prévue au niveau d'une position correspondant au trou d'aération (211a).

8. Module de batterie (10) selon la revendication 7,
dans lequel la ligne de découpe (610) présente un arc ou une forme en C.

9. Bloc-batterie comprenant un module de batterie (10) selon l'une quelconque des revendications 1 à 8.
